Europäisches Patentamt

European Patent Office

Office européen des brevets

(19)

(11) Veröffentlichungsnummer: **0 155 658**
**B1**

(12) **EUROPÄISCHE PATENTSCHRIFT**

(45) Veröffentlichungstag der Patentschrift: 27.06.90

(51) Int. Cl.⁵: **B 30 B 9/24**

(21) Anmeldenummer: **85103082.5**

(22) Anmeldetag: **16.03.85**

(54) Doppelbandpresse.

(30) Priorität: **23.03.84 DE 3410745**

(43) Veröffentlichungstag der Anmeldung:
**25.09.85 Patentblatt 85/39**

(45) Bekanntmachung des Hinweises auf die
Patenterteilung:
**27.06.90 Patentblatt 90/26**

(84) Benannte Vertragsstaaten:
**AT CH DE FR GB IT LI NL**

(56) Entgegenhaltungen:
**EP-A-0 013 548**
**DE-A-2 010 057**
**DE-A-2 108 507**
**DE-A-2 505 989**
**FR-A-2 265 254**
**GB-A-2 051 598**

(73) Patentinhaber: **Alb. Klein GmbH & Co. KG**
**Postfach 27**
**D-5241 Niederfischbach (DE)**

(72) Erfinder: **Bastgen, Wendel, Dipl.-Ing.**
**Eisenweg 48**
**D-5240 Betzdorf/Sieg (DE)**

(74) Vertreter: **Hiebsch, Gerhard F., Dipl.-Ing.**
**Erzbergerstrasse 5A Postfach 464**
**D-7700 Singen 1 (DE)**

Courier Press, Leamington Spa, England.

## Beschreibung

Die Erfindung betrifft eine Doppelbandpresse mit zwei über Trommeln geführten umlaufenden Siebbändern und einem von diesen begrenzten Spalt als Preßzone für ein durch diese geführtes Haufwerk als Preßgut.

Diese aus der FR—A—2 265 254 bekannte Doppelbandpresse dient dazu, Wasser aus Schlamm, Abwasserrückständen und ähnlichen Suspensionen zu beseitigen. Die Suspension wird zuerst auf der Oberseite des siebartigen Filterbandes abgelegt, wandert durch eine Abtropf- und Filterzone und kommt schließlich als gleichmäßig verteilte Schlammschicht in der eigentlichen Entwässerungszone an. An dieser Stelle drückt sich unter der nötigen Pressung ein von oben kommendes Preßband auf das Filterband, wobei das Preßgut im Spalt ausgepreßt wird. In der Preßzone liegen beide Bänder im wesentlichen noch waagerecht.

Gleichzeitig ist an dieser Stelle unter dem Filterband ein gebogenes Stützsieb angeordnet, dessen Konvexität gegen das Preßband gerichtet ist. Die Krümmung des Stützsiebes beginnt bei Null und erhöht sich fortschreitend ohne Unterbrechung bis zum Krümmungsmaß des am Ende des Stützsiebes angeordneten Umkehrzylinders. Für das Stützsieb wird unter anderem eine Platte aus Kunststoff vorgeschlagen, in der die Schlitze für den Wasserdurchtritt ausgeschnitten oder ausgefräst werden, worauf nun man dieser Kunststoffplatte — wie auch immer — die nötige Krümmung gibt.

Ziel der Erfindung ist es, die Entwässerung von Preßmassen in Doppelbandpressen der genannten Art zu verbessern. Zur Lösung dieser Aufgabe führen die Merkmale des Anspruches 1.

Der zwangsläufige Weg des siebartig ausgebildeten Bandes über die Konvex gekrümmte Gleitfläche der Stützplatte führt zu einem — auf das Preßgut wirkenden — Druckanstieg; dieser ist dadurch den jeweiligen Erfordernissen anzupassen, daß der Krümmungsradius der Sützplatte verändert werden kann und einstellbar ist. Hierzu ist die Stützplatte selbst aus einem flexiblen Werkstoff hergestellt und aus mehreren zueinander richtungsveränderlich angeordneten Teilen zusammengesetzt; ein perforiertes Gliederband mit in gewünschter Krümmung festlegbaren Gliedern führt z.B. zu einer besonders günstigen Bauform.

Diese Stützplatte hat gegenüber bekannten Stützwalzen den Vorteil, daß keine — zwischen den Walzen unvermeidlichen — Strecken verminderten Druckes entstehen, in denen ein Teil der gerade zuvor ausgepreßten Flüssigkeit wieder in das Preßgut zurückgesaugt wird. Denn dieser pulsierende Druckanstieg hat unter Umständen strukturviskose Veränderungen des Preßgutes besonders dann zur Folge, wenn es sich um ein schlammartiges Preßgut handelt, welches durch jene Veränderungen noch dünnflüssiger wird und ein Rückströmen bzw. seitliches Ausquetschen begünstigt.

Würde man beidseits der Preßzone keilförmig Preßplatten anordnen, würde zwar der Preßdruck gleichmäßig und ohne Zonen verminderten Druckes ansteigen, jedoch eine sehr hohe Reibung zwischen den beiden Bändern und ihren Gleitflächen entstehen sowie ein damit zusammenhängender Verschleiß. Gewisse Schwierigkeiten ergeben sich darüber hinaus durch relativ kleine offene Flächen von Preßplatten, welche das Preßgut beidseits begleiten und einen Filtratabfluß behindern. Beide beschriebenen Systeme haben gemeinsam den Nachteil, daß Fremdkörper unkontrollierbare Druckspitzen erzeugen, die zur Zerstörung der siebartigen Bänder und gegebenenfalls zum Ausfall der gesamten Preßzone führen können. All diese Mängel beseitigt die erfindungsgemäße Doppelbandpresse.

Besonders Weiterbildungen der Erfindung sind in den Unteransprüchen gekennzeichnet.

So kann die Krümmung der erfindungsgemäßen Stützplatte bevorzugt mittels Stellelementen verändert werden, welche an Trägern für die Stützplatte angreifen; diese Träger sind entweder unterhalb der Stützplatte — also im Krümmungsbogen — vorgesehen und werden dann zur Verminderung des Krümmungsradius angehoben, oder aber man ordnet bei etwa vertikal stehenden Stützplatten die Träger auf deren Rückseite an und führt die Stellelemente zur anderen Plattenseite hin; diese Stellelemente sind dann auf Zug beansprucht, wohingegen sie im erstgenannten Falle als Druckorgane dienen.

Als besonders günstig hat es sich insbesondere bei etwa vertikal gestellter Stützplatte erwiesen, dieser in Förderrichtung eine Walzenzone nachzuschalten, innerhalb deren die beiden Bänder mäanderartig geführt sind. Diese Walzenzone verläuft bevorzugt parallel zur Richtung der Stützplatte und erlaubt es infolgedessen, die Bänder vom Ende der Stützplatte durch die mäanderartige Zone zum Stützplattenanfang zurückzuführen. Gerade die letztgenannte Bauform bedingt einen verhältnismäßig geringen Raumbedarf bei hohem Wirkungsgrad.

In einer besonderen Ausführungsform können beide Bänder siebartig ausgebildet sein; ein Metallband kann durch ein entsprechendes flexibles Band aus oder mit Kunststoffsträngen ersetzt sein. Kunststoffbänder dieser Art schmiegen sich besonders günstig an die gekrümmte Gleitfläche der Stützplatte an und werden vor allen Dingen dann zum Einsatz gebracht, wenn die Preßzone zur Entwässerung von schlammartigen Suspensionen herangezogen wird.

Bezüglich weiterer Merkmale wird auf die Unteransprüche Bezug genommen.

Weitere Vorteile, Merkmale und Einzelheiten der Erfindung ergeben sich aus der nachfolgenden Beschreibung zweier bevorzugter Ausführungsbeispiele, welche in der Zeichnung jeweils in einem schematisierten Längsschnitt wiedergegeben sind.

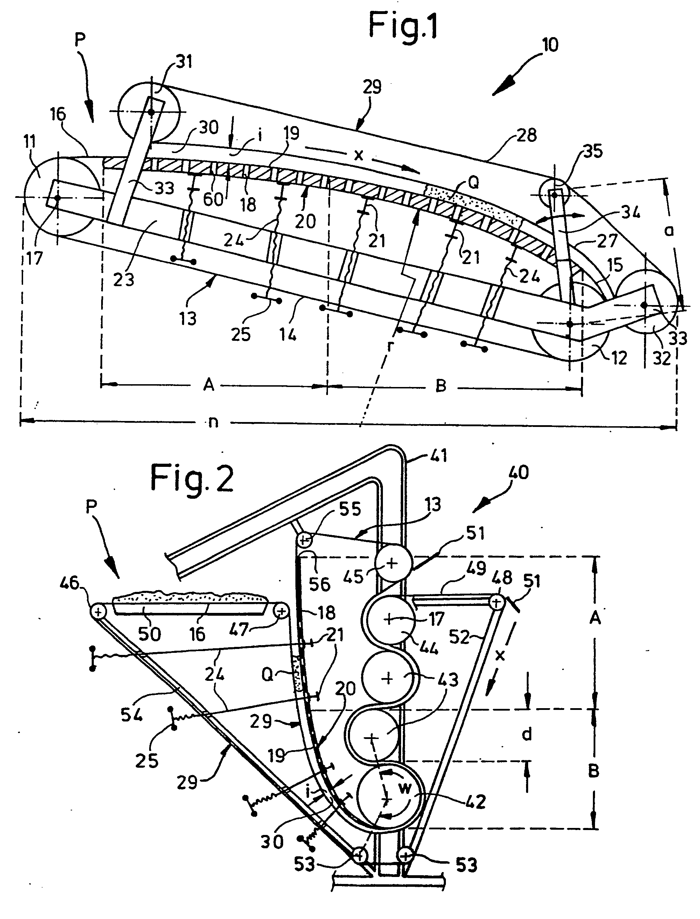

Eine Doppelbandpresse 10 weist gemäß Fig. 1 ein unendlich über zwei Trommeln 11, 12 gelegtes perforiertes Metallband 13 auf, dessen Untertrum 14 zwischen jenen Trommeln 11, 12 eine Tangentialebene bildet und dessen Obertrum 15 über eine aufwärts gekrümmte Stützplatte 20 geführt ist.

Die perforierte Stützplatte 20 ist aus begrenzt flexiblem Werkstoff hergestellt und ruht auf Querprofilen 21, deren Lage gegenüber einem die Trommeln 11, 12 haltenden Traggerüst 23 der Doppelbandpresse 10 durch bei 24 angedeutete Stellelemente justierbar ist. Durch Betätigung von Steuerorgan 25 der Stellelemente 24 kann die Krümmungsform der Stützplatte 20 verändert und in gewünschter Gestalt festgelegt werden.

Die in Förderrichtung x hintere Zone A der Stützplatte 20 ist im dargestellten Ausführungsbeispiel nahezu eben und geht in eine Krümmungszone B über, welche zur Trommel 12 hin abwärts gerichtet ist mit einem zu dieser hin abnehmenden Krümmungsradius r, der an der wiedergegebenen Stelle etwa der Länge n der Doppelbandpresse 10 entspricht.

Über dem Obertrum 15 des unteren Metallbandes 13 verläuft das Untertrum 27 eines oberen Metallbandes 29 unter Bildung eines Spaltes 30 einer in Förderrichtung x abnehmenden Spaltweite i.

Das Untertrum 27 des — ein Obertrum 28 aufweisenden — oberen Metallbandes 29 paßt sich im wesentlichen der Krümmungsform jener Stützplatte 20 an; die Spaltweite i wird dabei durch die Dicke einer Preßgutschicht Q aus einem — siehe Pfeil P — aufgegebenen Preßgut bestimmt.

Das obere Metallband 29 läuft über Trommeln 31, 32, die an Gestellarmen 33 festgelegt sind. Ein Laschenpaar 34 trägt eine Bandrolle 35 für das Obertrum 28 des oberen Metallbandes 29, dessen Spannung dank dieser Bandrolle 35 eingestellt werden kann; das Laschenpaar 34 ist um die Welle 17 der unten liegenden Trommel 12 schwenkbar und kann auch in ihrer Länge a verändert werden.

Beim Ausführungsbeispiel einer Doppelbandpresse 40 nach Fig. 2 sind an einem vertikalen Gestellbaum 41 übereinander an Wellen 17 mehrere Trommeln 42, 43, 44, 45 — mit von unten nach oben abnehmendem Durchmesser d — angeordnet. Zwischen diesen eine Walzenzone bildenden Walzen oder Trommeln 42—45 verlaufen mäanderartig zwei perforierte Metallbänder 13, 29.

Das Metallband 29 bildet zwischen zwei Rollen 46, 47 über einer Auffangwanne 50 eine horizontale Auffangfläche 16 für das Preßgut P, wird an Rolle 47 abwärts umgelenkt, gelangt entlang einer Stützplatte 20 zur unteren Sockeltrommel 42 und über diese sowie zwei mittlere Trommeln 43 zur Trommel 44, zwischen der und einer Austragsrolle 48 das Metallband 29 etwa horizontal als Austragsfläche 49 läuft. An einem Schaber 51 sowie einem geneigten Gestellteil 52 vorbei fährt das Metallband 29 abwärts zu Sockelrollen 53 und von diesen an einem geneigten Rahmenträger 54 zur Aufgaberolle 46 zurück, an der es in jene horizontale Auffangfläche 16 übergeht.

Das andere Metallband 13 wird — parallel zum Metallband 29 — an der Oberfläche 19 der gekrümmten Stützplatte 20 entlang zur Sockeltrommel 42 gelenkt; diese Stützplatte 20 ist in ihrem oberen Teil (Zone A) etwa vertikal gestellt und krümmt sich mit ihrem unteren Teil (Zone B) zur Sockeltrommel 42 hin, deren Umfang das Metallband 13 im Bereich eines Umschlingungswinkels w aufliegt — überdeckt vom anderen Metallband 29, welches dann unmittelbar auf den Umfang der nächsten Trommel 43 aufläuft. In dieser wechselweisen Anlage am jeweiligen Trommelumfang gelangen beide Metallbänder 13, 29 zur oberen Trommel 44, über welcher sie sich voneinander lösen; das obere Metallband 13 ist über eine Firstwalze 45 zu einer Umlenkrolle 55 geführt, welche über der Oberkante 56 der Stützplatte 20 lagert.

Die Stellelemente 24, welche bei der Doppelbandpresse 40 nahezu horizontal vom Rahmenträger 54 bis zu den Querprofilen 21 verlaufen, sind hier an der Rückseite 18 jener Stützplatte 20 angeordnet und werden zur Krümmungserhöhung von den Stellelementen 24 zur Stützplatte 20 hin gezogen, wohingegen die Stellelemente 24 in Fig. 1 die Querprofile 21 tragen und letztere zur Krümmungserhöhung gegen die Stützplatte 20 drücken.

Wie eingangs erwähnt, sind beide Doppelbandpressen 10, 40 sehr schematisiert wiedergegeben, teilweise die erforderlichen — von Walzengerüsten her bekannten — Pressengestelle bei 23, 33, 41, 52 und 54 nur angedeutet. Die Auffangvorrichtungen für durch die perforierten Metallbänder 13, 29 austretende Flüssigkeit sind — von der Auffangwanne 50 abgesehen — in der Zeichnung vernachlässigt.

Beide Doppelbandpressen 10, 40 sind mit einem Paar gelochter oder gewebter Metallbänder 13, 29 ausgerüstet, zwischen denen das Preßgut Q durch die von jener Stützplatte 20 sowie den Spalt 30 bestimmten Preßzone gefördert sowie sowohl durch die Metallbänder 13, 29 als auch durch die bei 60 perforierte elastische Stützplatte 20 entwässert wird. Diese ist bevorzugt aus Edelstahl gefertigt, kann aber auch — bei einem nicht wiedergegebenen Beispiel — eine Kunststoffplatte sein. In der Zeichnung ist nicht zu erkennen, daß die Oberfläche 19 der Stützplatte 20 als Gleitschicht ausgebildet ist.

Bei besonderen Ausführungsformen der Doppelbandpresse 10, 40 bestehen die umlaufenden Bänder 13, 29 aus einem Kunststoffgewebe oder aus einer Netzbahn, in der Schuß oder Kette ein Kunststoffstrang ist.

## Patentansprüche

1. Doppelbandpresse (10, 40) mit zwei über Trommeln (12, 13, 31, 32, 42, 43, 44, 45) geführten umlaufenden Siebbändern (13, 29) und einem von diesen begrenzten Spalt (30) als Preßzone für ein durch diese geführtes Haufwerk als Preßgut (P), wobei einem der Bänder (13) auf der vom Haufwerk abgekehrten Seite in der Preßzone ein Stützelement in Form einer gekrümmten Stützplatte (20) zugeordnet ist, die Durchbrüche (60) aufweist sowie aus einem flexiblen Werkstoff und aus mehreren zueinander richtungsveränderlich angeordneten Teilen besteht, mit deren Hilfe ihr in Förderrichtung abnehmender Krümmungsradius (r) einstellbar ist.

2. Doppelbandpresse nach Anspruch 1 dadurch gekennzeichnet, daß der Stützplatte (20) Stellelemente (24) zur Einstellung des/der Krümmungsradius/-Radien (r) zugeordnet sind.

3. Doppelbandpresse nach Anspruch 2, dadurch gekennzeichnet, daß die Stellelemente (24) mit Trägern verbunden sind, welche an der dem Band (13) abgewendeten Rückseite (18) der Stützplatte (20) verlaufen, wobei gegebenenfalls die Träger als Querprofile (21) quer zur Förderrichtung (x) verlaufen.

4. Doppelbandpresse nach Anspruch 3, dadurch gekennzeichnet, daß sowohl die Träger (21) als auch die Stellelemente (24) gemeinsam mit Steuerorganen (25) auf einer Rückseite (18) der Stützplatte (20) vorgesehen sind, oder daß die Stellelemente (24) an der von den Trägern (21) fernliegenden Seite (19) der Stützplatte (20) an Steuerorgane (25) angeschlossen sind.

5. Doppelbandpresse nach einem der Ansprüche 1 bis 4, dadurch gekennzeichnet, daß die gekrümmte Stützplatte (20) im wesentlichen vertikal verläuft, wobei die Bänder (13, 29) im wesentlichen horizontale Einlauf- und Austragsflächen (16 bzw. 49) bilden (Fig. 2).

6. Doppelbandpresse nach einem der Ansprüche 1 bis 5, dadurch gekennzeichnet, daß der gekrümmten Stützplatte (20) in Förderrichtung (x) eine Walzenzone (42, 43, 44) nachgeordnet ist, an deren Ende die Bänder (13, 29) auseinandergeführt sind, wobei das eine Band (29) die Austragsfläche (49) bildet.

7. Doppelbandpresse nach Anspruch 6, dadurch gekennzeichnet, daß Stützplatte (20) und Walzenzone (42 bis 44) parallel zueinander verlaufen und ein Band (13) am Ende der Walzenzone zum Anfang der von der Stützplatte (20) gebildeten Preßzone zurückgeführt ist.

8. Doppelbandpresse nach einem der Ansprüche 1 bis 7, dadurch gekennzeichnet, daß beide Bänder (13, 29) in an sich bekannter Weise Siebbänder sind.

**Revendications**

1. Presse à double bande (10, 40) avec deux bandes — tamis (13, 29) tournantes guidées à travers de tambours (12, 13, 31, 32, 42, 43, 44, 45) et une fente (30) limitée par celles-ci en tant que zone de pressage destinée à des matières en vrac comme matière à presser (P) guidées par celles-ci, à une des bandes (13) étant attribuée dans la zone de pressage sur le côté opposé aux matières en vrac un élément d'appui sous forme d'une plaque d'appui courbée (20), cette plaque présentant des ajours (60) et étant d'une matière flexible et composée de plusieurs parties variables en direction l'une vis à vis de l'autre à l'aide desquelles on peut régler son rayon de courbure (r) diminuant vers la direction de transport.

2. Presse à double bande selon la revendication 1 caractérisée en ce que à la plaque d'appui (20) sont attribués des éléments de réglage (24) pour régler le/les rayon(s) de courbure (r).

3. Presse à double bande selon la revendication 2 caractérisée en ce que les éléments de réglage (24) sont liés à des supports qui sont placés sur le côté arrière (18), opposé à la bande (13), de la plaque d'appui (20), les supports étant placés, le cas échéant, en tant que profilés transversaux (21), transversalement à la direction de transport (x).

4. Presse à double bande selon la revendication 3 caractérisée en ce que et les supports (21) et les éléments de réglage (24) sont prévus avec des organes de commande (25) sur un côté arrière (18) de la plaque d'appui (20) ou que les éléments de réglage (24) sont raccordés à des organes de commande (25) sur le côté (19) de la plaque d'appui (20) éloigné des supports (21).

5. Presse à double bande selon une des revendications 1 à 4 caractérisée en ce que la plaque d'appui courbée (20) est placée essentiellement en sens vertical, les bandes (13, 29) formant essentiellement des surfaces d'entrée et de décharge horizontales (16 ou 49) (fig. 2).

6. Presse à double bande selon une des revendications 1 à 5 caractérisée en ce que après la plaque d'appui courbée (20) en direction de transport (x) est placée une zone de rouleaux (42, 43, 44) au bout de laquelle les bandes (13, 29) sont séparées, l'une des bandes (29) constituant la surface de décharge (49).

7. Presse à double bande selon la revendication 6 caractérisée en ce que la plaque d'appui (20) et la zone de rouleaux (42 à 44) sont placées l'une parallèle à l'autre et que une bande (13) au bout de la zone des rouleaux est ramenée au commencement de la zone de pressage formée par la plaque d'appui (20).

8. Presse à double bande selon une des revendications 1 à 7 caractérisée en ce que les deux bandes (13, 29) sont des bandes-tamis connues en soi.

**Claims**

1. Double belt press (10, 40) comprising two endless filter belts (13, 29) guided over drums (12, 13, 31, 32, 42, 43, 44, 45) and a gap (30) limited by the belts as pressure zone for a heap of debris as pressure product (P), with a supporting means in the form of a curved supporting plate (20) being allocated to one of the belts (13) on the side averted from the heap of debris in the pressure zone, the supporting plate showing breakthroughs (60) and being composed of a flexible material and of several parts, arranged to one another variably concerning the direction, by which its radius of curvature (r) decreasing towards the driving direction is adjustable.

2. Double belt press according to claim 1, characterized in that the adjusting means (24) for adjusting the radius of curvature (r) are allocated to the supporting plate (20).

3. Double belt press according to claims 2, characterized in that the adjusting means (24) are linked with supports, which run along the rear side (18) of supporting plate (20) averted from the belt (13), with the supports possibly running as cross-sections (21) transversely to the driving direction (x).

4. Double belt press according to claim 3, characterized in that both the supports (21) and the adjusting means (24) are provided with control devices (25) at one rear side (8) of supporting plate (20), or that the adjusting means (24) are linked with control devices (25) at the side (19) of the supporting plate (20) averted from the supports (21).

5. Double belt press according to one of claims 1 to 4, characterized in that the curved supporting plate (20) essentially runs vertically, with the belts (13, 29) basically constituting horizontal entry and delivery surfaces (16 or 49) (fig. 2).

6. Double belt press according to one of claims 1 to 5, characterized in that the curved supporting plate (20) is followed by a roller zone (42, 43, 44) in the direction (x), at the end of which one of the belts (13, 29) disengage in order to constitute the delivery surface (49).

7. Double belt press according to claim 6, characterized in that the supporting plate (20) and the roller zone (42 to 44) run parallel to one another and a belt (13) is returned from the end of the roller zone to the beginning of the pressure zone constituted by the supporting plate (20).

8. Double belt press according to one of claims 1 to 7, characterized in that both belts (13, 29) are filter belts.

EP 0 155 658 B1

Fig.1

Fig.2

1